# EUROPEAN PATENT SPECIFICATION

(11) **EP 3 726 676 B1**
(45) Date of publication and mention of the grant of the patent: **19.10.2022**
(21) Application number: 17934834.7
(22) Date of filing: 14.12.2017
(51) Int. Cl.: H02B 11/24, H02B 1/56, H02B 11/12, H02B 11/04

(54) **DRAWER TYPE BREAKER**
EINSCHUB-SCHUTZSCHALTER
DISJONCTEUR DE TYPE TIROIR

(43) Date of publication of application: 21.10.2020
(73) Proprietor: Mitsubishi Electric Corporation, Tokyo 100-8310 (JP)
(72) Inventor: AKASAKA, Kenichi, Tokyo 102-0073 (JP); MATSUDA, Kazuhisa, Tokyo 102-0073 (JP)
(74) Representative: Diehl & Partner
(86) International application number: PCT/JP2017/044901
(87) International publication number: WO 2019/116498

(56) References cited:
- CN-A- 102 386 579
- CN-U- 201 829 855
- CN-Y- 201 298 685
- JP-A- H07 241 008
- JP-A- 2004 227 905
- JP-A- 2007 166 853
- JP-A- 2014 113 035
- JP-U- H01 180 108
- KR-A- 20090 062 631
- US-B2- 8 137 120

## Description

### Field

The present invention relates to a drawer type breaker whose breaker body is put in a drawer frame for which a terminal device is set.

### Background

A drawer type breaker including a shutter mechanism is conventionally known. The shutter mechanism has a function of covering conductors on a drawer frame side in order to prevent exposure of the conductors on the drawer frame side as viewed from the breaker body side, the conductors on the drawer frame side being distanced from conductors on the breaker side of the breaker body when a breaker body is drawn out of the drawer frame.

For example, Japanese Patent Application Laid-open No. H06-22418 discloses a shutter mechanism including a static shutter that is a panel having openings that allow conductors on the breaker side, which project from the breaker body, to penetrate therethrough, and a movable shutter to be moved to a position where the openings of the static shutter are covered by means of a drive mechanism when the breaker body is drawn out.

A drawer type breaker according to the preamble of claim 1 is known from US 8 137 120 B2. Further prior art is disclosed in CN 201 298 685 Y, CN 102 386 579 A, CN 201 829 855 U and KR 2009 0062631 A.

### Summary

### Technical Problem

During electric conduction through the drawer type breaker, heat is generated in a connection portion between the breaker-side conductor of the breaker body and the drawer-frame side conductor of the terminal device. However, the above-mentioned conventional drawer type breaker including the shutter mechanism is disadvantageous in that heat dissipation is limited since the breaker body side of the terminal device is covered during electric conduction thereof.

It is an object of the invention to provide a drawer type breaker which can improve heat removal efficiency in the connection portion.

### Solution to Problem

This object is solved by a drawer type breaker having the features of appended claim 1. Advantageous embodiments are defined in the appended depending claims.

### Advantageous Effects of Invention

The present invention provides an advantage in that temperature increase in a connection portion between the breaker-side conductor of the breaker body and the drawer-frame side conductor of the terminal device can be minimized.

### Brief Description of Drawings

FIG. 1 is an external view of a drawer type circuit breaker according to a first embodiment of the present invention.
FIG. 2 is an external view illustrating a situation in which a breaker body has been drawn out of a drawer frame in the drawer type breaker according to the first embodiment.
FIG. 3 is a rear view illustrating how multiple terminal units constituting the terminal device according to the first embodiment are arranged in the drawer frame.
FIG. 4 is an exploded perspective view of a terminal unit according to the first embodiment.
FIG. 5 is a plan view illustrating an example configuration of the drawer-frame side conductor according to the first embodiment.
FIG. 6 is a rear view of an insulation base of a terminal unit according to the first embodiment.
FIG. 7 is a cross-sectional view taken along a line VII-VII illustrated in FIG. 6.
FIG. 8 is an exploded perspective view of the shutter mechanism, which illustrates the relationship between the insulation base and the shutter mechanism according to the first embodiment.
FIG. 9 is an external perspective view of a panel unit constituting the shutter mechanism according to the first embodiment.
FIG. 10 is an external perspective view of a shutter constituting the shutter mechanism according to the first embodiment.
FIG. 11 is an external perspective view of a slider constituting the shutter mechanism according to the first embodiment.
FIG. 12 is a partial cross-sectional view of the drawer type breaker having a state in which the breaker body according to the first embodiment has been received in the drawer frame.
FIG. 13 is a partial cross-sectional view of the drawer type breaker having a state in which the breaker body according to the first embodiment has been drawn out of the drawer frame.
FIG. 14 is a front view of the terminal device to which the shutter mechanism according to the first embodiment is attached.
FIG. 15 is a cross-sectional view taken along a line XV-XV illustrated in FIG. 14.
FIG. 16 is a cross-sectional view illustrating a situation in which a slider has been ejected from the terminal device according to the first embodiment.
FIG. 17 is a view illustrating a situation in which a lock member has been attached to the shutter mechanism according to the first embodiment.
FIG. 18 is a cross-sectional view taken along a line XVIII-XVIII illustrated in FIG. 14.
FIG. 19 is a view for describing airways formed in the drawer type breaker according to the first embodiment.
FIG. 20 is another view for describing airways formed in the drawer type breaker according to the first embodiment.

### Description of Embodiment

A drawer type breaker according to an embodiment of the present invention will be described in detail below with reference to the drawings.

### First Embodiment.

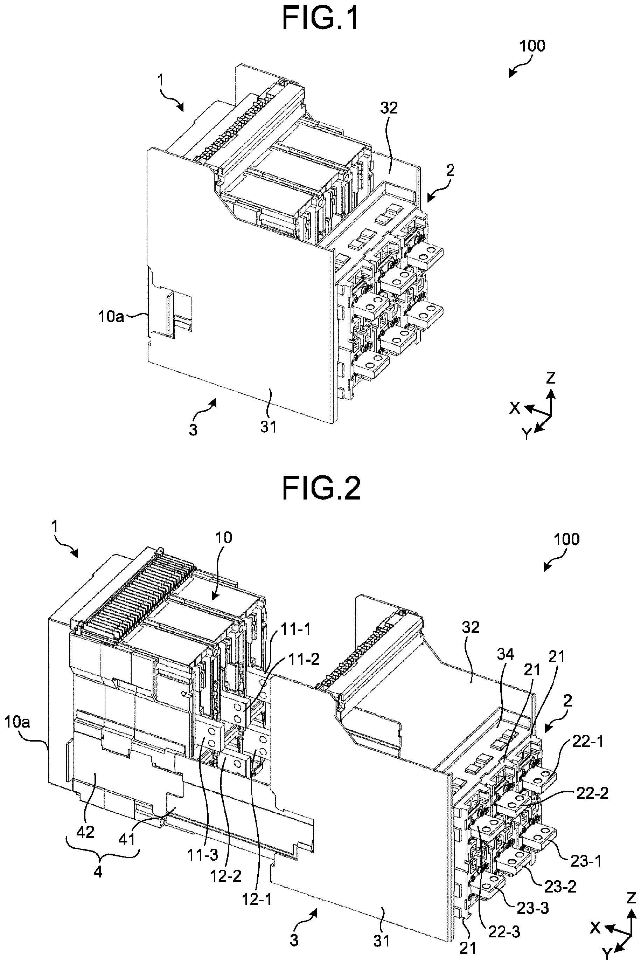

FIG. 1 is an external view of a drawer type breaker according to a first embodiment of the present invention. FIG. 2 is an external view illustrating a situation in which a breaker body has been drawn out of a drawer frame in the drawer type breaker according to the first embodiment. Note that for the purpose of facilitating an understanding, the drawings including FIGs. 1 and 2 illustrate a three-dimensional orthogonal coordinate system including a Z-axis in which a vertically upward direction is defined as a positive direction thereof, an X-axis in which a direction toward the front of a drawer type breaker 100 according to the first embodiment is defined as a positive direction thereof, and a Y-axis in which a leftward direction of the drawer type breaker 100 is defined as a positive direction thereof.

As illustrated in FIG. 1, the drawer type breaker 100 according to the first embodiment includes a breaker body 1 which opens and closes an electrical path of a three-phase circuit, a terminal device 2 connected with the breaker body 1, and a drawer frame 3 in which the terminal device 2 is set and which drawably receives the breaker body 1. As illustrated in FIG. 2, the drawer type breaker 100 further includes a draw-out rail 4 which joins together the breaker body 1 and the drawer frame 3. Such draw-out rail 4 enables the breaker body 1 to be drawn out of the drawer frame 3. Note that the drawer type breaker 100 is, for example, housed in an enclosure of an enclosed switchboard (not shown) in such a manner that the breaker body 1 is drawable.

The breaker body 1 has a well-known structure for performing an opening operation and a closing operation of an electrical path of a three-phase circuit. An opening operation is an operation for breaking an electrical path of each of a phase R, a phase S, and a phase T of the three-phase circuit, and a closing operation is an operation for connecting an electrical path of each of the phase R, the phase S, and the phase T of the three-phase circuit. Note that the breaker body 1 may be configured to perform an opening operation and a closing operation of an electrical path of a single-phase circuit.

The breaker body 1 includes: a housing 10 which houses fixed contacts, movable contacts, an open and close mechanism, and a trip mechanism (each not shown); and breaker-side conductors 11-1, 11-2, 11-3, 12-1, 12-2, and 12-3 projecting rearward of the housing 10. The fixed contact and the movable contact are provided for each phase. The breaker-side conductor 12-3 is not illustrated in FIG. 2 because of the unseeable location thereof, but is disposed under the breaker-side conductor 11-3. Note that the breaker-side conductors 11-1, 11-2, and 11-3 may each be hereinafter referred to as breaker-side conductor 11 without distinction therebetween, and the breaker-side conductors 12-1, 12-2, and 12-3 may each be hereinafter referred to as breaker-side conductor 12 without distinction therebetween.

The housing 10 has a front portion 10a on which operation buttons (not shown) are disposed. By operation of such operation buttons, a closing operation is performed, which brings the movable contact into contact with the fixed contact on a per-phase basis, and an opening operation is performed, which separates the movable contact from the fixed contact on a per-phase basis. Bringing the movable contact into contact with the fixed contact on a per-phase basis causes the electrical path of the three-phase circuit to be closed, thereby causing the breaker body 1 to be in an electric conduction state. Otherwise, separation of the movable contact from the fixed contact on a per-phase basis causes the electrical path of the three-phase circuit to be opened, thereby causing the breaker body 1 to be in a non-conduction state. In addition, the trip mechanism provided in the housing 10 is configured to automatically separate the movable contact from the fixed contact on a per-phase basis so as to break the electrical path of the three-phase circuit when an overcurrent flows in the three-phase circuit.

The breaker-side conductors 11-1, 11-2, and 11-3 are each a conductor that is connected to the fixed contact provided in the housing 10, and electrically connected to a supply-side conductor (not shown) via the terminal device 2. The breaker-side conductors 12-1, 12-2, and 12-3 are each a conductor that is connected to the movable contact provided in the housing 10, and electrically connected to a load-side conductor (not shown) via the terminal device 2. The breaker-side conductors 11-1 and 12-1 are conductors for forming an electrical path for the phase R. The breaker-side conductors 11-2 and 12-2 are conductors for forming an electrical path for the phase S. The breaker-side conductors 11-3 and 12-3 are conductors for forming an electrical path for the phase T.

Note that, in the example illustrated in FIG. 1, the breaker-side conductors 11-1, 11-2, and 11-3 are positioned above the breaker-side conductors 12-1, 12-2, and 12-3, but the breaker-side conductors 11-1, 11-2, and 11-3 may be positioned under the breaker-side conductors 12-1, 12-2, and 12-3.

The terminal device 2 includes multiple insulation bases 21, and drawer-frame side conductors 22-1, 22-2, 22-3, 23-1, 23-2, and 23-3 housed in these multiple insulation bases 21, whose rear portions project. The drawer-frame side conductor 22-1 has one end portion connected to the supply-side conductor (not shown) for the phase R, and another end portion to be connected to the breaker-side conductor 11-1 when the breaker body 1 is received in the drawer frame 3. The drawer-frame side conductor 22-2 has one end portion connected to the supply-side conductor (not shown) for the phase S, and another end portion to be connected to the breaker-side conductor 11-2 when the breaker body 1 is received in the drawer frame 3. The drawer-frame side conductor 22-3 has one end portion connected to the supply-side conductor (not shown) for the phase T, and another end portion to be connected to the breaker-side conductor 11-3 when the breaker body 1 is received in the drawer frame 3. Note that the supply-side conductor is a conductor for connecting between a power supply device and the drawer type breaker 100.

In addition, the drawer-frame side conductor 23-1 has one end portion connected to the load-side conductor (not shown) for the phase R, and another end portion to be connected to the breaker-side conductor 12-1 when the breaker body 1 is received in the drawer frame 3. The drawer-frame side conductor 23-2 has one end portion connected to a load-side conductor (not shown) for the phase S, and another end portion to be connected to the breaker-side conductor 12-2 when the breaker body 1 is received in the drawer frame 3. The drawer-frame side conductor 23-3 has one end portion connected to a load-side conductor (not shown) for the phase T, and another end portion to be connected to the breaker-side conductor 12-3 when the breaker body 1 is received in the drawer frame 3. The load-side conductor is a conductor for connecting between a load supplied with electrical power from the power supply device and the drawer type breaker 100. The load is, for example, an electrical device that operates with electrical power from the power supply device.

The drawer-frame side conductors 22-1, 22-2, and 22-3 may each be hereinafter referred to as drawer-frame side conductor 22 without distinction therebetween, and the drawer-frame side conductors 23-1, 23-2, and 23-3 may each be hereinafter referred to as drawer-frame side conductor 23 without distinction therebetween. The configuration of the terminal device 2 will be described later in detail.

The drawer frame 3 has left and right side plates 31 and 32. As illustrated in FIG. 1, the breaker body 1 is drawably received in the drawer frame 3 that is a space bounded by the left and right side plates 31 and 32. In addition, the terminal device 2 is detachably set in the drawer frame 3.

In the example illustrated in FIG. 1, the reception of the breaker body 1 into the drawer frame 3 is performed with a state in which the front portion 10a of the breaker body 1 is exposed to outside, and the setting of the terminal device 2 into the drawer frame 3 with a state in which the drawer-frame side conductors 22 and 23 project rearward. Note that the drawer frame 3 is not limited to the configuration illustrated in FIGs. 1 and 2, and the reception position of the breaker body 1 in the drawer frame 3 and the setting position of the terminal device 2 in the drawer frame 3 are not limited to those of the example illustrated in FIGs. 1 and 2.

The draw-out rail 4 is a draw-out rail for joining together the breaker body 1 and the drawer frame 3 in such a manner that the breaker body 1 is drawable out of the drawer frame 3. The draw-out rail 4 is constructed of multiple rail members 41 and 42 joined together in such a manner that the length of the draw-out rail 4 is variable in an anterior-posterior direction. Note that what is needed for the draw-out rail 4 is to have a configuration to join together the breaker body 1 and the drawer frame 3 with a state in which the breaker body 1 is drawable out of the drawer frame 3, and such a configuration is not limited to the configuration illustrated in FIG. 2. In addition, instead of the draw-out rail 4, one or more members may be provided in the drawer type breaker 100, the members joining together the breaker body 1 and the drawer frame 3 in such a manner that the breaker body 1 is drawable out of the drawer frame 3.

The breaker body 1 is equipped with, for example, a drawing handle and a draw-out mechanism (each not shown). By engaging the drawing handle with the draw-out mechanism, the draw-out rail 4 can be extended and retracted in an anterior-posterior direction based on the draw-out mechanism. Extension of the draw-out rail 4 in the anterior-posterior direction causes the breaker body 1 to be drawn out of the drawer frame 3, and retraction of the draw-out rail 4 in the anterior-posterior direction causes the breaker body 1 to be received in the drawer frame 3 thereby connecting the breaker-side conductors 11 and 12 of the breaker body 1 with the drawer-frame side conductors 22 and 23 of the terminal device 2, respectively.

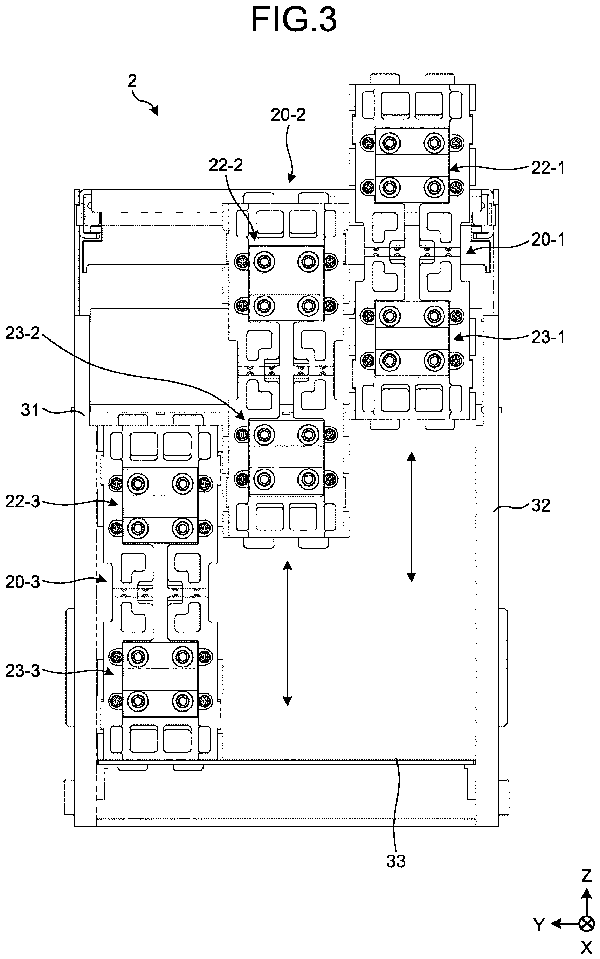

A specific configuration of the terminal device 2 will next be described. FIG. 3 is a rear view illustrating how multiple terminal units constituting the terminal device according to the first embodiment are arranged in the drawer frame. As illustrated in FIG. 3, the terminal device 2 includes three terminal units 20-1, 20-2, and 20-3.

In the example illustrated in FIG. 3, it is shown how the terminal units 20-1, 20-2, and 20-3 are arranged in the drawer frame 3. The bidirectional arrows illustrated in FIG. 3 indicate moving directions of the terminal units 20-1 and 20-2. The terminal units 20-1, 20-2, and 20-3 can be set in the drawer frame 3 when they are moved from an upper position to a lower position of the drawer frame 3, and can be detached from the drawer frame 3 when they are moved to an upper portion of the drawer frame 3.

The terminal units 20-1, 20-2, and 20-3 each have a bottom portion that is inserted in an opening (not shown) of a retention plate 33 constituting the drawer frame 3, and thus the bottom portion is retained by the retention plate 33. In addition, as illustrated in FIG. 2, the terminal units 20-1, 20-2, and 20-3 each have a top portion that is inserted in an opening (not shown) of a retention plate 34 constituting the drawer frame 3, and thus the top portion is retained in the retention plate 34. In this way, the terminal device 2 is secured in the drawer frame 3.

The retention plates 33 and 34 are secured to the side plates 31 and 32, and removal of the retention plate 33 from the side plates 31 and 32 enables the terminal units 20-1, 20-2, and 20-3 to be detached from the drawer frame 3. In this manner, the terminal device 2 is detachably set in the drawer frame 3.

The terminal unit 20-1 includes the drawer-frame side conductors 22-1 and 23-1 that are each a conductor for the phase R. In addition, the terminal unit 20-2 includes the drawer-frame side conductors 22-2 and 23-2 that are each a conductor for the phase S. Moreover, the terminal unit 20-3 includes the drawer-frame side conductors 22-3 and 23-3 that are each a conductor for the phase T. Note that the terminal device 2 illustrated in FIG. 3 is composed of the three terminal units 20-1, 20-2, and 20-3, but integral formation of the multiple insulation bases 21 of the terminal units 20-1, 20-2, and 20-3 will enable the terminal device 2 to be configured by a single terminal unit.

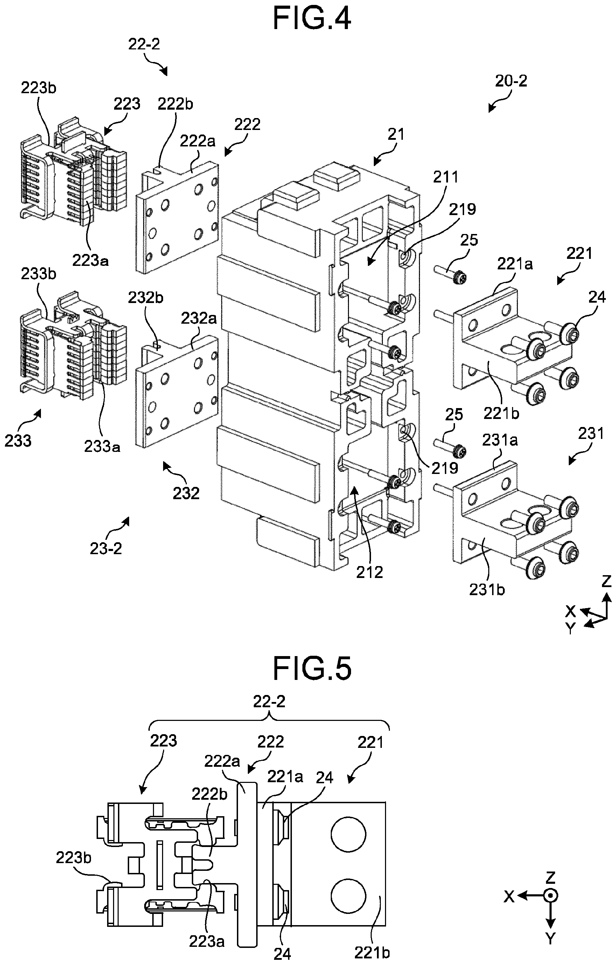

A configuration of each of the terminal units 20-1, 20-2, and 20-3 will now be specifically described. Note that because the terminal units 20-1, 20-2, and 20-3 are configured to be the same as one another, a configuration of the terminal unit 20-2 will be described below. FIG. 4 is an exploded perspective view of a terminal unit according to the first embodiment. FIG. 5 is a plan view illustrating an example configuration of the drawer-frame side conductors according to the first embodiment.

As illustrated in FIG. 4, the terminal unit 20-2 includes the insulation base 21 and the drawer-frame side conductors 22-2 and 23-2. The insulation base 21 has a terminal receiving portion 211 in which the drawer-frame side conductor 22-2 is inserted, and another terminal receiving portion 212 in which the drawer-frame side conductor 23-2 is inserted.

The drawer-frame side conductor 22-2 includes a terminal conductor 221, a relay terminal conductor 222, and a connector 223. Similarly, the drawer-frame side conductor 23-2 includes a terminal conductor 231, a relay terminal conductor 232, and a connector 233. The drawer-frame side conductors 22-2 and 23-2 are configured to be the same as each other.

The terminal conductor 221 of the drawer-frame side conductor 22-2 includes a base portion 221a lying along the Z-Y plane that is a first vertical plane, and a terminal portion 221b extending rearward from the base portion 221a and placed in parallel to the X-Y plane that is a horizontal plane. The terminal portion 221b of the terminal conductor 221 is connected with a supply-side conductor not shown. In addition, similarly to the terminal conductor 221, the terminal conductor 231 of the drawer-frame side conductor 23-2 includes a base portion 231a and a terminal portion 231b, and the terminal portion 231b of the terminal conductor 231 is connected with a load-side conductor not shown.

In the example illustrated in FIG. 4, the base portions 221a and 231a each have a square shape whose four sides are equal in length to each other in a front view thereof, and are each formed in a rectangular solid. In addition, the terminal portions 221b and 231b are formed to extend perpendicularly to, and rearward from, the base portions 221a and 231a, from a middle portion in a region sandwiched by a pair of vertically opposed sides of the base portions 221a and 231a, respectively. Bottom faces of the base portions 221a and 231a are each a flat surface. Note that the terminal portions 221b and 231b are each formed to have a T-shape in a lateral view, but the shape thereof is not limited to the shape illustrated in FIG. 4.

The relay terminal conductor 222 includes a base portion 222a lying along the Z-Y plane that is the first vertical plane, and a leading portion 222b extending forward from the base portion 222a along the X-Z plane that is a second vertical plane orthogonal to the first vertical plane, the leading portion being formed to have a Y-shape in a planar view. In addition, similarly to the relay terminal conductor 222, the relay terminal conductor 232 of the drawer-frame side conductor 23-2 includes a base portion 232a and a leading portion 232b.

The relay terminal conductor 222 is inserted in the terminal receiving portion 211, and the base portion 222a of the relay terminal conductor 222 is secured by two or more screws 25. Similarly, the relay terminal conductor 232 is inserted in the terminal receiving portion 212, and the base portion 232a of the relay terminal conductor 232 is secured by the two or more screws 25. In this regard, the multiple screws 25 are attached to the relay terminal conductors 222 and 232 passing through multiple screw holes 219 provided in the insulation base 21.

As illustrated in FIG. 5, the base portion 222a of the relay terminal conductor 222 is joined to the base portion 221a of the terminal conductor 221 by means of multiple bolts 24. By doing so, the relay terminal conductor 222 is electrically connected with the terminal conductor 221. Note that the bottom face of the base portion 222a is a flat surface similarly to the bottom face of the base portion 221a. Therefore, the bottom face of the base portion 222a and the bottom face of the base portion 221a are in contact with each other in a state in which the base portion 222a of the relay terminal conductor 222 and the base portion 221a of the terminal conductor 221 are joined together.

Note that, in the example illustrated in FIGs. 4 and 5, the relay terminal conductor 222 and the terminal conductor 221 are secured to each other by means of the four bolts 24, but the number of the bolts 24 is not limited to four. In addition, as long as the relay terminal conductor 222 and the terminal conductor 221 are detachably secured to each other, the relay terminal conductor 222 and the terminal conductor 221 may be secured to each other by means of a fastening device other than the bolts 24.

Similarly to the connection between the relay terminal conductor 222 and the terminal conductor 221, the base portion 232a of the relay terminal conductor 232 is joined to the base portion 231a of the terminal conductor 231 by means of bolts 24. By doing so, the relay terminal conductor 232 is electrically connected with the terminal conductor 231.

Note that the relay terminal conductor 222 and the terminal conductor 221 are formed as their respective separate members, but as long as the relay terminal conductor 222 and the terminal conductor 221 are inserted in the insulation base 21 and secured to the insulation base 21, the relay terminal conductor 222 and the terminal conductor 221 may be formed integrally. Similarly, the relay terminal conductor 232 and the terminal conductor 231 may be formed integrally.

As illustrated in FIG. 5, the connector 223 of the drawer-frame side conductor 22-2 is connected to the relay terminal conductor 222. Such connector 223 is connected to the breaker-side conductor 11-2 of the breaker body 1 in a state in which the breaker body 1 has been received in the drawer frame 3. The connector 223 includes a groove portion 223a to engage with the relay terminal conductor 222, and a groove portion 223b to engage with the breaker-side conductor 11-2.

The connector 223 and the relay terminal conductor 222 are connected to each other by insertion of the leading portion 222b of the relay terminal conductor 222 into the groove portion 223a of the connector 223. A member forming the groove portion 223a and a member forming the leading portion 222b are resilient. Therefore, engagement of the leading portion 222b with the groove portion 223a causes the outer surface of the leading portion 222b and the inner wall surface of the groove portion 223a to press against each other. This can ensure firm engagement between the leading portion 222b and the groove portion 223a, and can prevent disengagement between the relay terminal conductor 222 and the connector 223 when the breaker-side conductor 11-2 is pulled out from the drawer-frame side conductor 22-2. In this way, the engagement between the leading portion 222b and the groove portion 223a also functions as a stopper.

In addition, connection between the connector 223 and the breaker-side conductor 11-1 is performed by insertion of the leading portion of the breaker-side conductor 11-2 into the groove portion 223b of the connector 223. When the leading portion of the breaker-side conductor 11-2 is inserted into the groove portion 223b of the connector 223, the connector 223 can perform a swinging motion. The engagement portion between the leading portion 222b and the groove portion 223a becomes a point of support for the swinging motion of the connector 223. Note that the connector 223 may also be configured not to perform any swinging motion.

The connector 233 of the drawer-frame side conductor 23-2 is connected to the relay terminal conductor 232, and includes a groove portion 233a to engage with the relay terminal conductor 232, and a groove portion 233b to engage with the breaker-side conductor 12-2. Connection between the connector 233 and the relay terminal conductor 232 is performed by insertion of the leading portion 232b of the relay terminal conductor 232 into the groove portion 233a of the connector 233. In addition, connection between the connector 233 and the breaker-side conductor 12-2 is performed by insertion of the leading portion of the breaker-side conductor 12-2 into the groove portion 233b of the connector 233.

Note that the terminal conductor 221, the relay terminal conductor 222, and the connector 223 may be formed by integral forming. Similarly, the terminal conductor 231, the relay terminal conductor 232, and the connector 233 may be formed by integral forming.

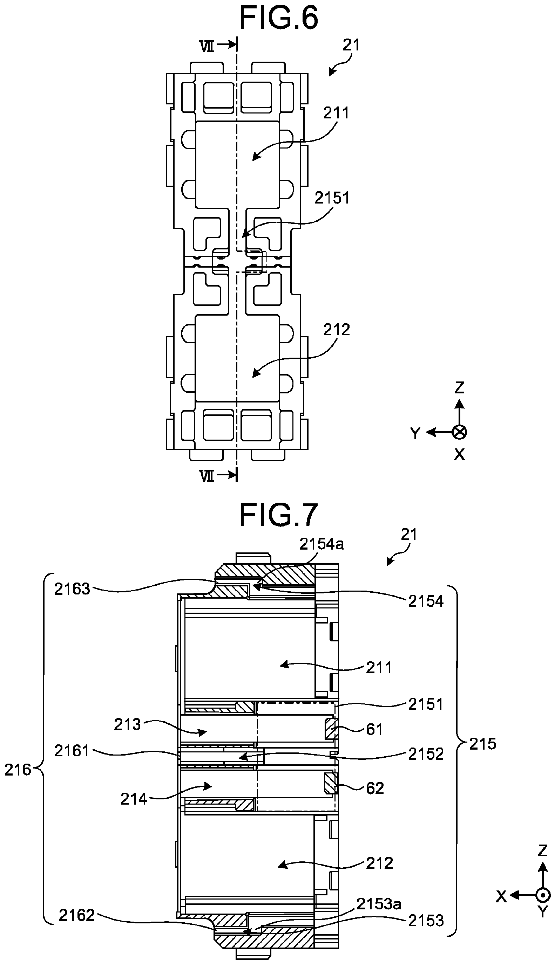

A configuration of the insulation base 21 will next be described specifically. FIG. 6 is a rear view of the insulation base of a terminal unit according to the first embodiment. FIG. 7 is a cross-sectional view taken along a line VII-VII illustrated in FIG. 6. Note that the terminal units 20-1, 20-2, and 20-3 have equal insulation bases 21 having the same configuration. In addition, the cross-sectional view illustrated in FIG. 7 is partially simplified.

As illustrated in FIGs. 6 and 7, the insulation base 21 includes the terminal receiving portion 211 that provides the space in which the drawer-frame side conductor 22 is housed, and the terminal receiving portion 212 that provides the space in which the drawer-frame side conductor 23 is housed.

In addition, the insulation base 21 includes a slider housing portion 213 that provides the space in which a slider 53 (described later) is housed, and a slider housing portion 214 that provides the space in which a slider 54 (described later) is housed. The slider housing portion 213 has, as described later, slider sliding grooves 213a and 213b formed therein. In addition, similarly to the slider housing portion 213, the slider housing portion 214 also has slider sliding grooves formed therein.

The insulation base 21 further includes an airway portion 215 and an air vent portion 216. The airway portion 215 includes a vertical airway 2151 formed between the terminal receiving portion 211 and the terminal receiving portion 212, and an anterior-posterior airway 2152 that is interposed vertically between the slider housing portions 213 and 214 and extends in the anterior-posterior direction. The airway portion 215 further includes a lower airway 2153 that is formed in a lower portion of the insulation base 21 and extends in the anterior-posterior direction, and an upper airway 2154 that is formed in an upper portion of the insulation base 21, and extends in the anterior-posterior direction.

In addition, as illustrated in FIG. 7, the air vent portion 216 includes an air vent 2161 that continuously connects to the anterior-posterior airway 2152, another air vent 2162 that continuously connects to the lower airway 2153, and yet another air vent 2163 that continuously connects to the upper airway 2154.

The vertical airway 2151 is formed in a groove shape in the insulation base 21, and has one end portion continuously connecting to the terminal receiving portion 211 and another end portion continuously connecting to the terminal receiving portion 212. Such vertical airway 2151 allows natural convection to occur between the connection portion between the breaker-side conductor 11 and the drawer-frame side conductor 22, and the connection portion between the breaker-side conductor 12 and the drawer-frame side conductor 23.

The vertical airway 2151 shares a part of space with the slider housing portions 213 and 214. Note that, as described later, the sliders 53 and 54 described later are housed only in the insulation base 21 of the terminal unit 20-2 of the terminal units 20-1, 20-2, and 20-3.

The anterior-posterior airway 2152 has one end portion continuously connecting to the air vent 2161, and another end portion continuously connecting to the vertical airway 2151. In the example illustrated in FIG. 7, the anterior-posterior airway 2152 extends from the air vent 2161 to a central portion of the insulation base 21 in the anterior-posterior direction and continuously connects to the vertical airway 2151, but may be configured to continuously connect to the terminal receiving portions 211 and 212 from the central portion of the insulation base 21 in the anterior-posterior direction. In addition, although not illustrated in the figure, there are two of the anterior-posterior airway 2152, which are formed in the insulation base 21 with being spaced apart from each other in a crosswise direction. There are also two of the air vent 2161, which are formed in the insulation base 21 with being spaced apart from each other in a crosswise direction.

The anterior-posterior airways 2152 allow air to flow from the front of the insulation base 21 through the air vents 2161 into the anterior-posterior airways 2152, and the flowed-in air to flow through the vertical airway 2151 into the terminal receiving portions 211 and 212.

The lower airway 2153 has one end portion continuously connecting to the air vent 2162, and another end portion continuously connecting to the terminal receiving portion 212. Such lower airway 2153 allows air to flow through the air vent 2162 of the insulation base 21 into the terminal receiving portion 212.

In the example illustrated in FIG. 7, the lower airway 2153 extends from the air vent 2162 to a central portion of the insulation base 21 in the anterior-posterior direction and continuously connects to the terminal receiving portion 212. In addition, to prevent making direct contact with the drawer-frame side conductor 23-2, the lower airway 2153 has a bent portion 2153a that is bent upward. Note that what is needed for the lower airway 2153 is to have a bent shape to prevent making direct contact with the drawer-frame side conductor 23-2, and a configuration thereof is not limited to the configuration illustrated in FIG. 7.

The upper airway 2154 has one end portion continuously connecting to the air vent 2163, and another end portion continuously connecting to the terminal receiving portion 211. Such upper airway 2154 allows air to flow from the front of the insulation base 21 through the air vent 2163 into the terminal receiving portion 211.

In the example illustrated in FIG. 7, the upper airway 2154 extends from the air vent 2163 to a central portion of the insulation base 21 in the anterior-posterior direction and continuously connects to the terminal receiving portion 211. In addition, to prevent making direct contact with the drawer-frame side conductor 22-2, the upper airway 2154 has a bent portion 2154a that is bent downward. Note that what is needed for the upper airway 2154 is to have a bent shape to prevent making direct contact with the drawer-frame side conductor 22-2, and a configuration thereof is not limited to the configuration illustrated in FIG. 7.

As described above, the insulation base 21 has the airway portion 215 and the air vent portion 216 formed therein. As described later, these airway portion 215 and air vent portion 216 can minimize temperature increase in the connection portion between the breaker-side conductor 11 and the drawer-frame side conductor 22, and minimize temperature increase in the connection portion between the breaker-side conductor 12 and the drawer-frame side conductor 23.

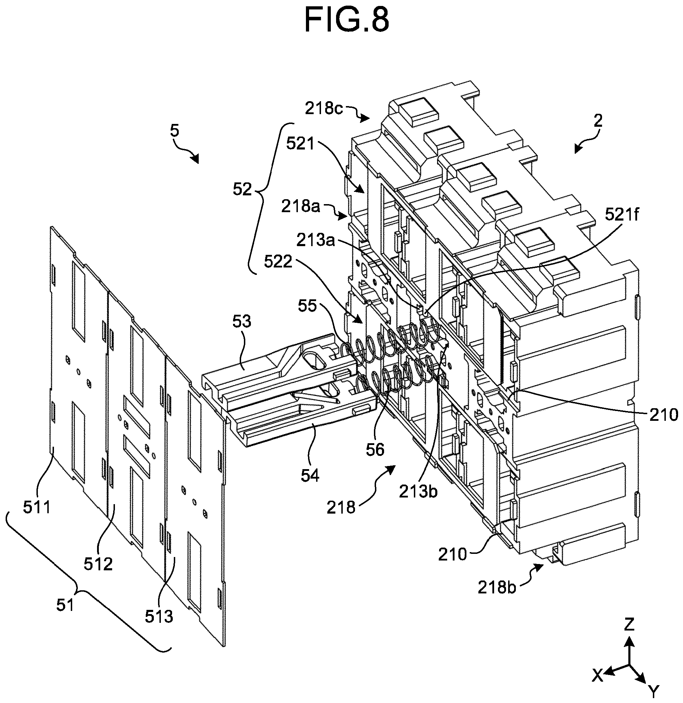

To prevent forward exposure of the drawer-frame side conductors 22 and 23 to be pulled apart from the breaker-side conductors 11 and 12 of the breaker body 1 when the breaker body 1 has been drawn out of the drawer frame 3, the drawer type breaker 100 has a shutter mechanism 5 (described later) that covers the drawer-frame side conductors 22 and 23. FIG. 8 is an exploded perspective view of the shutter mechanism, which illustrates the relationship between the insulation base and the shutter mechanism according to the first embodiment.

As illustrated in FIG. 8, the shutter mechanism 5 includes a panel unit 51 which covers the front of the terminal device 2, a shutter unit 52 disposed between the panel unit 51 and the terminal device 2, the sliders 53 and 54, and compression springs 55 and 56. The panel unit 51 includes three panels 511, 512, and 513. In addition, the shutter unit 52 includes two shutters 521 and 522. The panel unit 51 is set at a position opposed to a region 218a between a bottom portion region 218b and a top portion region 218c, of a region 218 opposed to the breaker body 1 in the insulation base 21.

The compression spring 55 has one end portion attached to a base end portion of the slider 53, and the compression spring 56 has one end portion attached to a base end portion of the slider 54. As illustrated in FIG. 7, the insulation base 21 has thereon spring receiving portions 61 and 62 provided to receive the compression springs 55 and 56, respectively. The compression spring 55 has another end portion attached to the spring receiving portion 61 fixed to the insulation base 21, and the compression spring 56 has another end portion attached to the spring receiving portion 62 fixed to the insulation base 21. Note that the spring receiving portions 61 and 62 are configured as separate members different from the insulation base 21, but may also be formed integrally with the insulation base 21.

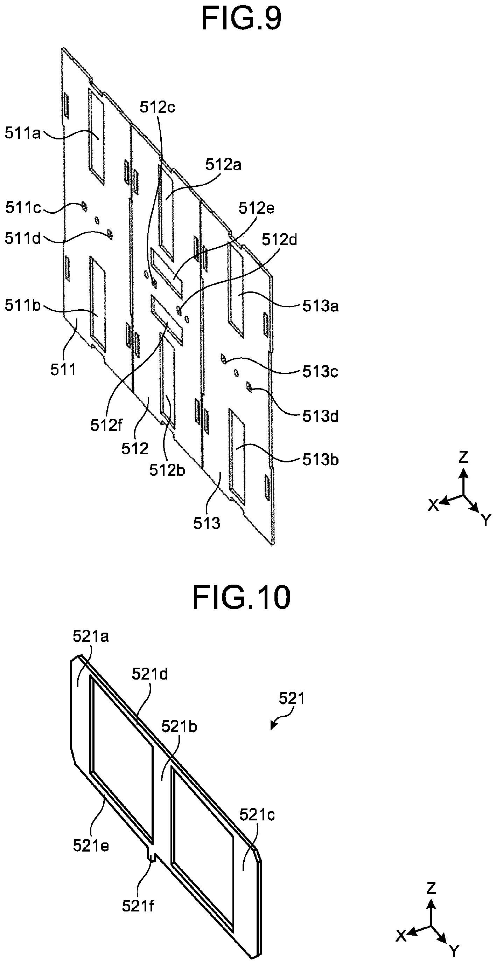

First of all, the panels 511, 512, and 513 of the panel unit 51 will be specifically described. FIG. 9 is an external perspective view of the panel unit constituting the shutter mechanism according to the first embodiment. As illustrated in FIG. 9, the panel 511 includes an opening 511a to be penetrated by the breaker-side conductor 11, an opening 511b to be penetrated by the breaker-side conductor 12, and two air vents 511c and 511d provided with being opposed to the two air vents 2161. The panel 513 is configured similarly to the panel 511, and thus includes openings 513a and 513b and air vents 513c and 513d which are similar to the openings 511a and 511b and the air vents 511c and 511d, respectively.

In addition, the panel 512 includes openings 512a and 512b and air vents 512c and 512d which are similar to the openings 511a and 511b and the air vents 511c and 511d of the panel 511, respectively, and further includes an opening 512e to be penetrated by the slider 53, and an opening 512f to be penetrated by the slider 54.

Note that, in the example illustrated in FIG. 9, the panel unit 51 is configured to include the three panels 511, 512, and 513, but the panel unit 51 may also be configured to have a single panel formed by integral formation of the panels 511, 512, and 513. In addition, in the example illustrated in FIG. 8, the panel unit 51 is detachably connected to the insulation bases 21, but the panel unit 51 may also be detachably secured to the drawer frame 3.

Next, the shutters 521 and 522 of the shutter unit 52 will be specifically described. Hereinbelow, a configuration of the shutter 521 will be specifically described. FIG. 10 is an external perspective view of a shutter constituting the shutter mechanism according to the first embodiment.

As illustrated in FIG. 10, the shutter 521 includes: blocking plate portions 521a, 521b, and 521c; a joining portion 521d joining together top portions of the blocking plate portions 521a, 521b, and 521c; a joining portion 521e joining together the bottom portions of the blocking plate portions 521a, 521b, and 521c; and a projecting portion 521f projecting downward from the joining portion 521e. Note that the shutter 522 is configured in the same manner as the shutter 521 except that a projecting portion 522f (not shown) of the shutter 522 projects upward unlike the projecting portion 521f of the shutter 521.

The shutter 521 is slidably attached to the insulation bases 21. As illustrated in FIG. 8, the insulation base 21 has two or more sliding surfaces 210 formed thereon. Then, the shutter 521 is attached to be slidable on the sliding surface 210. The shutter 521 can slide in the left-right direction on the sliding surface 210 to selectively move to either a blocking position or an opening position. The blocking position is a position at which the openings 511a, 512a, and 513a are blocked by the blocking plate portions 521a, 521b, and 521c, respectively. The opening position is a position in which the openings 511a, 512a, and 513a is not blocked by the blocking plate portions 521a, 521b, and 521c, respectively.

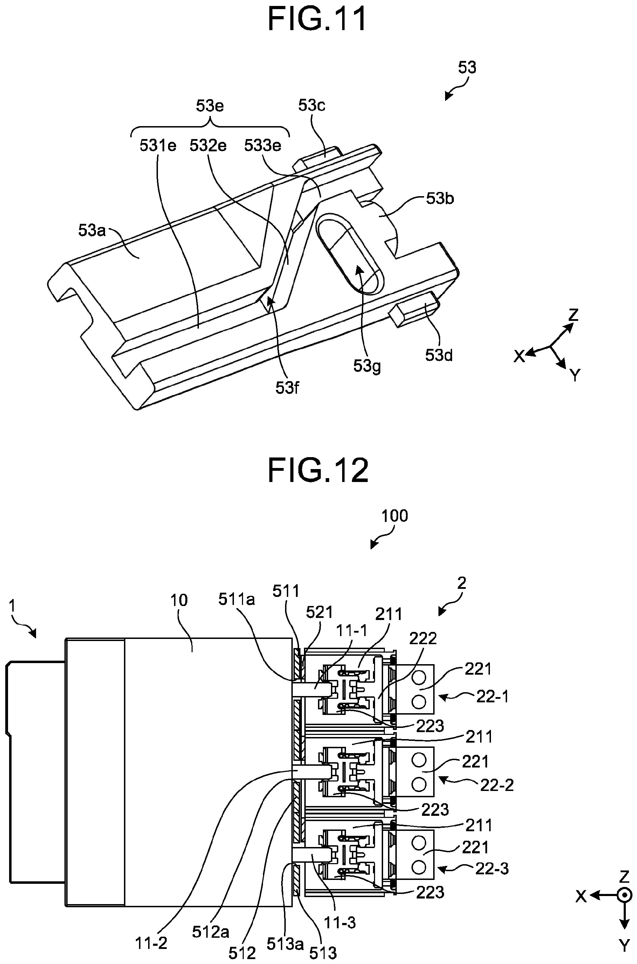

The sliders 53 and 54 will next be described. Since the sliders 53 and 54 have equal configurations, one configuration of the slider 53 will be specifically described below, and a description of a specific configuration of the slider 54 will be omitted. FIG. 11 is an external perspective view of a slider constituting the shutter mechanism according to the first embodiment.

As illustrated in FIG. 11, the slider 53 includes a body portion 53a formed in a rectangular shape in a planar view, a projecting portion 53b to which one end portion of the compression spring 55 is to be attached, and projecting portions 53c and 53d to be inserted in the slider sliding grooves 213a and 213b to slide in the anterior-posterior direction in the slider sliding grooves 213a and 213b illustrated in FIG. 8, the grooves being formed in the slider housing portion 213.

The slider 53 further includes a groove portion 53e to engage with the projecting portion 521f of the shutter 521 illustrated in FIGs. 8 and 10, an opening 53f formed with penetrating a partial area of the groove portion 53e downward continuously with the groove portion 53e, and an opening 53g formed with penetrating a region surrounded by the projecting portion 53b and the groove portion 53e in the vertical direction. The groove portion 53e includes a first rectilinear portion 531e extending rearward from a front left portion of the slider 53, an oblique portion 532e extending from an end of the first rectilinear portion 531e to a rear right portion thereof, and a second rectilinear portion 533e extending rearward from an end of the oblique portion 532e.

Movement of the projecting portion 521f of the shutter 521 in the oblique portion 532e of the groove portion 53e causes the shutter 521 to slide in the left-right direction by means of the slider 53. Note that the slider 54 is configured in the same manner as the slider 53, and thus, although not shown, includes a groove portion 54e and openings 54f and 54g (each not shown) that are similar to the groove portion 53e and the openings 53f and 53g of the slider 53, respectively. The openings 53g and 54g of the sliders 53 and 54 are used, as described later, as openings for ventilation and openings for locking.

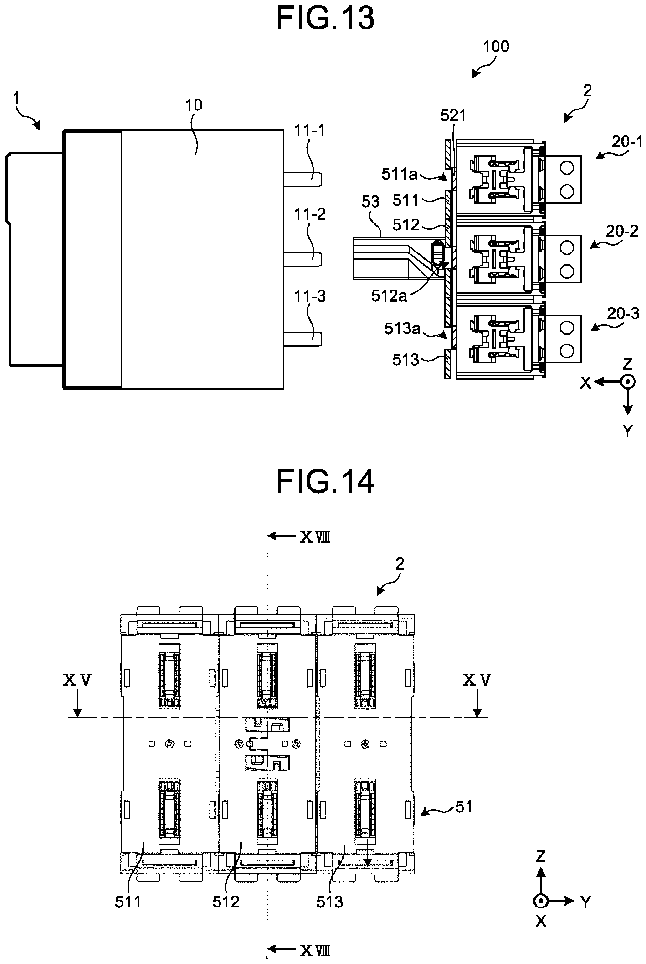

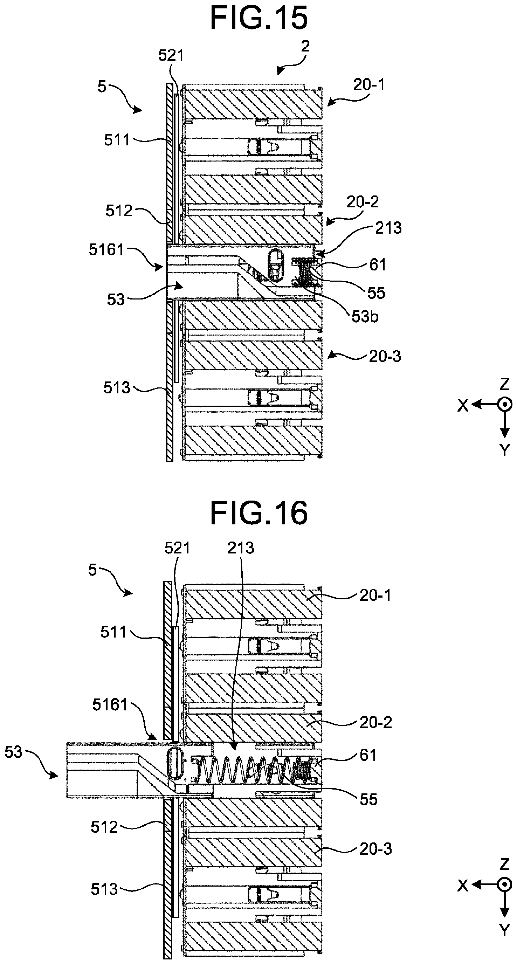

FIG. 12 is a partial cross-sectional view of the drawer type breaker with a state in which the breaker body according to the first embodiment has been received in the drawer frame. FIG. 13 is a partial cross-sectional view of the drawer type breaker with a state in which the breaker body according to the first embodiment has been drawn out of the drawer frame. FIG. 14 is a front view of the terminal device having the shutter mechanism according to the first embodiment attached thereto. FIG. 15 is a cross-sectional view taken along a line XV-XV illustrated in FIG. 14. FIG. 16 is a cross-sectional view illustrating a situation in which the slider has been ejected from the terminal device according to the first embodiment. The partial cross-sectional views illustrated in FIGs. 12 and 13 include a plan view of the part other than the terminal device 2, and a cross-sectional view of an upper portion of the terminal device 2. In FIGs. 12 and 13, the drawer frame 3 and the draw-out rail 4 are omitted.

As illustrated in FIG. 12, in the state in which the breaker body 1 has been received in the drawer frame 3, the breaker-side conductor 11-1 is inserted in the terminal receiving portion 211 of the terminal device 2 through the opening 511a of the panel 511. In the terminal receiving portion 211, the breaker-side conductor 11-1 is connected to the connector 223 of the drawer-frame side conductor 22-1.

Similarly, the breaker-side conductor 11-2 is inserted in the terminal receiving portion 211 of the terminal device 2 through the opening 512a of the panel 512, and is connected to the connector 223 of the drawer-frame side conductor 22-2. The breaker-side conductor 11-3 is inserted in the terminal receiving portion 211 of the terminal device 2 through the opening 513a of the panel 513, and is connected to the connector 223 of the drawer-frame side conductor 22-3.

In addition, as illustrated in FIG. 15, in the state in which the breaker body 1 has been received in the drawer frame 3, the slider 53 is pushed into the slider housing portion 213 of the breaker body 1. Note that the projecting portion 53b of the slider 53 is attached to the spring receiving portion 61 via the compression spring 55.

As illustrated in FIGs. 13 and 16, the drawer type breaker 100 is configured such that when the breaker body 1 has been drawn out of the drawer frame 3 forward from the state illustrated in FIGs. 12 and 15, the slider 53 that has been pushed in the slider housing portion 213 of the breaker body 1 is pushed forward due to extension force of the compression spring 55. This causes the projecting portion 521f of the shutter 521 to slide on the groove portion 53e of the slider 53, and after the breaker-side conductors 11-1, 11-2, and 11-3 pass through the openings 511a, 512a, and 513a, the shutter 521 moves to the left. Thus, the openings 511a, 512a, and 513a are blocked by the blocking plate portions 521a, 521b, and 521c, respectively. Note that the slider 53 is pushed back toward the front side of the insulation base 21, but the projecting portions 53c and 53d of the slider 53 hit on the panel 512, so that the forward movement of the slider 53 is stopped.

Note that the relationship between the shutter 522 and the slider 54 is, in principle, the same as the relationship between the shutter 521 and the slider 53, but because the slider 54 is attached to the terminal device 2 in a vertically reverse manner with respect to the slider 53, the slider 54 moves in a direction opposite to the moving direction of the slider 53.

Specifically, the drawer type breaker 100 is configured such that when the breaker body 1 has been drawn out of the drawer frame 3 in the forward direction from the state illustrated in FIG. 12, the slider 54 is pushed in the forward direction by an extension force of the compression spring 56. Thus, after the breaker-side conductors 12-1, 12-2, and 12-3 pass through the openings 511b, 512b, and 513b, the shutter 522 moves to the right. This causes the openings 511b, 512b, and 513b to be blocked by the shutter 522 similarly to the case of the relationship between the openings 511a, 512a, and 513a and the shutter 521.

As described above, the drawer type breaker 100 is configured such that when the breaker body 1 has been drawn out of the drawer frame 3, the openings 511a, 512a, 513a, 511b, 512b, and 513b of the panels 511, 512, and 513 are blocked by the shutters 521 and 522. This allows the drawer-frame side conductors 22 and 23 to be exposed to outside forward from the terminal device 2.

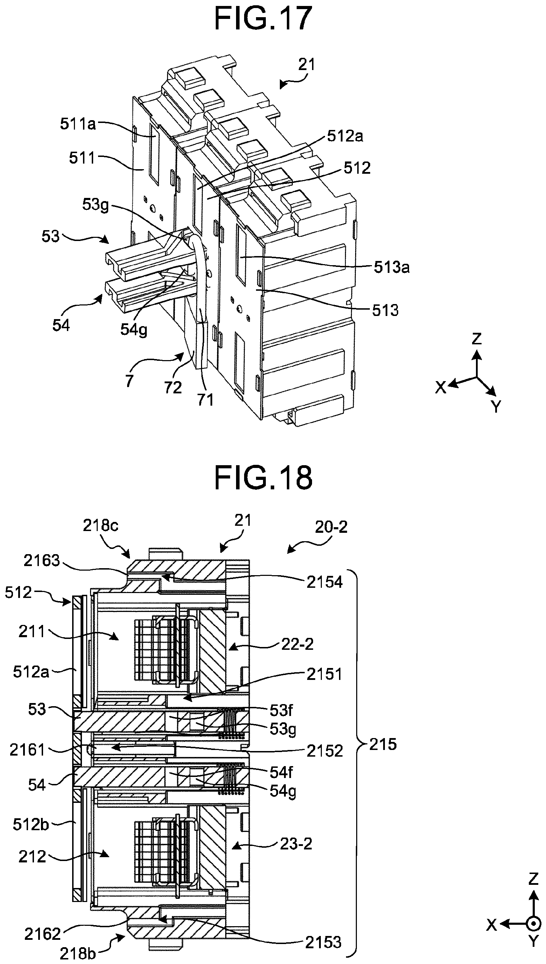

The drawer type breaker 100 is capable of preventing the sliders 53 and 54 from being pushed into the insulation base 21, using a lock member, with a state in which the breaker body 1 has been drawn out of the drawer frame 3. FIG. 17 is a view illustrating a situation in which the shutter mechanism according to the first embodiment having a lock member attached thereto. Note that, for convenience of illustration, FIG. 17 does not illustrate the breaker body 1, the components of the terminal device 2 except the insulation base 21, and the draw-out rail 4.

As illustrated in FIG. 17, the openings 53g and 54g of the sliders 53 and 54 are penetrated by a shackle 71 of a lock member 7, and the shackle 71 is locked by a lock body 72. In the state illustrated in FIG. 17, the shackle 71 and the lock body 72 of the lock member 7 come into contact with the panel unit 51, so that movement of the sliders 53 and 54 toward the insulation base 21 is restricted.

By so doing, movement of the shutters 521 and 522 is limited even when some force toward the insulation base 21 is exerted against the sliders 53 and 54. Accordingly, a situation is kept in which the openings 511a, 512a, 513a, 511b, 512b, and 513b of the panels 511, 512, and 513 are shut by the shutters 521 and 522. Note that the lock member 7 illustrated in FIG. 17 is a padlock, but the lock member 7 is not limited to a padlock, and may be a lock member other than a padlock.

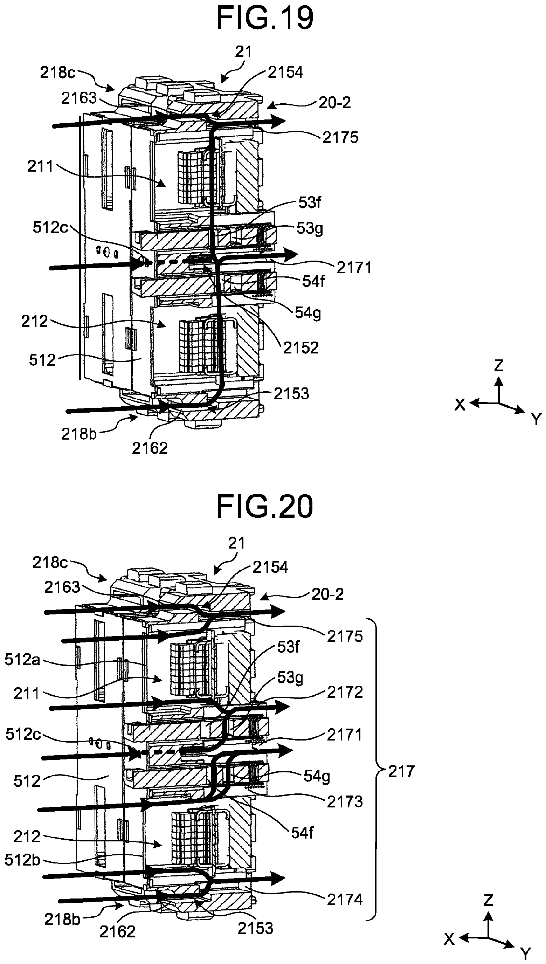

A configuration for minimizing temperature increase in the connection portions between the breaker-side conductors 11 and 12 of the breaker body 1 and the drawer-frame side conductors 22 and 23 of the terminal device 2 will now be described more specifically. FIG. 18 is a cross-sectional view taken along a line XVIII-XVIII illustrated in FIG. 14. FIGs. 19 and 20 are each a view for describing the airways formed in the drawer type breaker according to the first embodiment. Note that FIGs. 18 to 20 do not illustrate some part of the configuration of the terminal conductors 221 and 231 in the drawer-frame side conductors 22 and 23. In addition, FIGs. 19 and 20 illustrate an example of airflow using bold arrows.

As illustrated in FIG. 18, in the insulation base 21 of the terminal unit 20-2, there are formed the vertical airway 2151, the anterior-posterior airways 2152, the lower airway 2153, and the upper airway 2154. As illustrated in FIGs. 19 and 20, the lower airway 2153 is formed in the bottom portion region 218b that is not opposed to the panel unit 51, of the region 218 opposed to the breaker body 1, and the upper airway 2154 is formed in the top portion region 218c that is not opposed to the panel unit 51, of the region 218 opposed to the breaker body 1. In addition, as illustrated in FIG. 20, an exhaust portion 217 is formed in a rear portion of the insulation base 21 illustrated in FIG. 18, the exhaust portion including multiple openings 2171, 2172, 2173, 2174, and 2175 that each function as an exhaust port.

The opening 2171 is provided at the rear of the anterior-posterior airway 2152 with continuously connecting to the vertical airway 2151. The opening 2172 is provided at the rear end of a space between the terminal receiving portion 211 and the slider housing portion 213, of the vertical airway 2151, with continuously connecting to that space. In addition, the opening 2173 is provided at the rear end of a space between the terminal receiving portion 212 and the slider housing portion 214, of the vertical airway 2151, with continuously connecting to that space. The opening 2174 is provided at the rear end of the lower airway 2153 with continuously connecting to the lower airway 2153. The opening 2175 is provided at the rear end of the upper airway 2154.

As illustrated in FIG. 19, air flows from the air vent 512c of the panel 512 through the air vent 2161 illustrated in FIG. 18 into the anterior-posterior airway 2152, air flows from the air vent 2162 into the lower airway 2153, and air flows from the air vent 2163 into the upper airway 2154. That is, the air vent 512c of the panel 512 and the air vents 2162 and 2163 of the insulation base 21 each function as an air inlet.

While the insulation base 21 of the terminal unit 20-2 has received therein the sliders 53 and 54, the slider 53 has the opening 53f formed to penetrate therethrough in the vertical direction, and similarly, the slider 54 has the opening 54f formed to penetrate therethrough in the vertical direction. As such, as illustrated in FIG. 19, the air flowed from the lower airway 2153 into the terminal receiving portion 212 flows through the opening 54f and the opening 53f into the terminal receiving portion 211.

The air flowed into the anterior-posterior airway 2152 flows through the opening 53f of the slider 53 into the terminal receiving portion 211, and flows out of the opening 2171 formed at the rear of the anterior-posterior airway 2152. The air flowed into the terminal receiving portion 211 and the air flowed into the upper airway 2154 flow out to the outside of the insulation base 21 from the opening 2175 formed at the rear of the upper airway 2154. In this way, the openings 2171 and 2175 each function as a ventilation outlet.

As described above, in the drawer type breaker 100, the vertical airway 2151, the anterior-posterior airway 2152, the lower airway 2153, and the upper airway 2154 provide a vertical flow channel in the terminal receiving portions 211 and 212, thereby making it possible to improve the heat dissipation property in the terminal receiving portions 211 and 212. Note that it is sufficient for the airway portion 215 to include at least one airway that can enhance a heat dissipation efficiency in the terminal receiving portions 211 and 212. For example, the airway portion 215 may be configured to include three or less of the vertical airway 2151, the anterior-posterior airways 2152, the lower airway 2153, and the upper airway 2154. Alternatively, the airway portion 215 may be configured to include an airway other than the vertical airway 2151, the anterior-posterior airways 2152, the lower airway 2153, and the upper airway 2154.

In addition, when the breaker body 1 is connected to the terminal device 2, the openings 512a and 512b are not closed by the shutters 521 and 522. Accordingly, as illustrated in FIG. 20, gaps between the breaker-side conductors 11 and 12 and the openings 512a and 512b each function as an air inlet, and thus form an airway together with the anterior-posterior airway 2152, the lower airway 2153, the upper airway 2154, and so on. This configuration can also minimize increase in temperature in the connection portions between the breaker-side conductors 11 and 12 of the breaker body 1 and the drawer-frame side conductors 22 and 23 of the terminal device 2.

Moreover, the insulation bases 21 of the terminal units 20-1 and 20-3 do not receive the slider 53 or 54. Therefore, the vertical airway 2151, the anterior-posterior airway 2152, the lower airway 2153, the upper airway 2154, and so on can minimize temperature increase in the connection portions between the breaker-side conductors 11 and 12 and the drawer-frame side conductors 22 and 23 to a similar or greater extent than in the terminal unit 20-2.

As described above, the drawer type breaker 100 according to the first embodiment includes the breaker body 1, the terminal device 2, the drawer frame 3, and the shutter mechanism 5. The terminal device 2 includes the multiple drawer-frame side conductors 22 and 23 to be connected to supply-side conductors and to load-side conductors, and is placed in the drawer frame 3. The breaker body 1 includes the multiple breaker-side conductors 11 and 12 to be connected to the multiple drawer-frame side conductors 22 and 23 of the terminal device 2 when being received in the drawer frame 3, and is configured to be drawable out of the drawer frame 3. The shutter mechanism 5 includes the panel unit 51 and the shutter unit 52. The panel unit 51 has the multiple openings 511a, 511b, 512a, 512b, 513a, and 513b that are penetrated by the multiple breaker-side conductors 11 and 12 when the breaker body 1 is received in the drawer frame 3, and the panel unit 51 is set between the terminal device 2 and the breaker body 1. The shutter unit 52 closes the multiple openings 511a, 511b, 512a, 512b, 513a, and 513b when the breaker body 1 has been drawn out of the drawer frame 3. The terminal device 2 includes the insulation base 21 having the multiple terminal receiving portions 211 and 212 to receive the multiple drawer-frame side conductors 22 and 23, respectively, and having the airway portion 215 including one or more airways connected from the region opposed to the breaker body 1 to at least one of the multiple terminal receiving portions 211 and 212. The airway portion 215 enables air ventilation to be provided to at least one of the multiple terminal receiving portions 211 and 212. Therefore, for example, when the breaker body 1 is in a conduction state, air ventilation of the terminal receiving portion 211 can minimize temperature increase in the connection portion between the breaker-side conductor 11 of the breaker body 1 and the drawer-frame side conductor 22 of the terminal device 2. In addition, when the breaker body 1 is in a conduction state, air ventilation of the terminal receiving portion 212 can minimize temperature increase in the connection portion between the breaker-side conductor 12 of the breaker body 1 and the drawer-frame side conductor 23 of the terminal device 2.

Moreover, the airway portion 215 includes the vertical airway 2151 that connects between the multiple terminal receiving portions 211 and 212. Therefore, air ventilation can be provided between the multiple terminal receiving portions 211 and 212, and it is possible to effectively minimize temperature increase in the connection portions between the breaker-side conductors 11 and 12 of the breaker body 1 and the drawer-frame side conductors 22 and 23 of the terminal device 2.

Furthermore, the shutter unit 52 includes the air vents 513c and 513d, and the airway portion 215 includes the anterior-posterior airway 2152 having one end opposed to the air vent 513c or 513d. Therefore, air can be caused to flow from the front of the terminal device 2 into the insulation base 21. In addition, the anterior-posterior airway 2152 communicates to the vertical airway 2151, and by so doing, the air flowed from the front of the terminal device 2 into the insulation base 21 can be used for air ventilation of the multiple terminal receiving portions 211 and 212.

In addition, the airway portion 215 includes the lower airway 2153 and the upper airway 2154 each having a bent shape and communicating from the bottom portion region 218b and the top portion region 218c that are not opposed to the panel unit 51, of the region 218 opposed to the breaker body 1, to the multiple terminal receiving portions 211 and 212. Since the lower airway 2153 and the upper airway 2154 have their bent shapes, it is possible to prevent direct contact with the drawer-frame side conductor 22 even when a finger or the like is inserted from the front of the terminal device 2, for example.

Moreover, the drawer type breaker 100 is equipped with the sliders 53 and 54 set in the insulation base 21, the sliders moving the shutter unit 52 in the forward direction that is a direction for drawing out the breaker body 1, in accordance with drawing out the breaker body 1 from the drawer frame 3. The insulation base 21 includes the slider housing portions 213 and 214 formed between the terminal receiving portions 211 and 212, the slider housing portions housing the sliders 53 and 54 movably in the direction in which the sliders are opposed to the breaker body 1. The sliders 53 and 54 include the openings 53f, 53g, 54f, and 54g forming airways between the terminal receiving portions 211 and 212. This configuration can form an airway between the terminal receiving portions 211 and 212 while the sliders 53 and 54 have been received in the insulation base 21 of the breaker body 1. Thereby, one insulation base 21 of the terminal unit 20-2 in which the sliders 53 and 54 are provided and the other insulation bases 21 of the terminal units 20-1 and 20-3 in which the sliders 53 and 54 are not provided can be made for shared use, and so it is possible to save manufacturing cost of the drawer type breaker 100.

In addition, the lock member 7 can be attached through the openings 54f and 54g of the sliders 53 and 54, the lock member being intended to keep the situation in which the breaker body 1 has been drawn out of the drawer frame 3. This configuration can thus reduce manufacturing cost of the drawer type breaker 100 as compared to a case of additionally providing a member for locking the sliders 53 and 54 using the lock member 7.

Moreover, the shutter unit 52 includes the projecting portion 521f that is an example of a first engagement portion that engages with the slider 53. The slider 53 includes the groove portion 53e that is an example of a second engagement portion that engages with the projecting portion 521f. The opening 53f of the slider 53 is formed to continuously connect to the groove portion 53e. This configuration can minimize reduction in strength of the slider 53 as compared to a case in which the opening 53f is provided in a location where no continuous connection to the groove portion 53e is provided.

Furthermore, the breaker body 1 includes the multiple breaker-side conductors 11 and 12 for each phase of three-phase alternating current. The terminal device 2 includes, for each phase, the multiple drawer-frame side conductors 22 and 23 and the insulation base 21. The sliders 53 and 54 are set in the insulation base 21 for one phase, of the insulation bases 21 for the three phases. This configuration can reduce the number of components of the drawer type breaker 100 as compared to a case in which the sliders 53 and 54 are provided in each of the insulation bases 21 for the three phases, and can thus save manufacturing cost of the drawer type breaker 100.

### Reference Signs List

1 breaker body; 2 terminal device; 3 drawer frame; 4 draw-out rail; 5 shutter mechanism; 7 lock member; 10 housing; 10a front portion; 11, 11-1, 11-2, 11-3, 12, 12-1, 12-2, 12-3 breaker-side conductor; 20-1, 20-2, 20-3 terminal unit; 21 insulation base; 22, 22-1, 22-2, 22-3, 23, 23-1, 23-2, 23-3 drawer-frame side conductor; 24 bolt; 25 screw; 31, 32 side plate; 33, 34 retention plate; 41, 42 rail member; 51 panel unit; 52 shutter unit; 53, 54 slider; 53a body portion; 53b, 53c, 53d, 521f, 522f projecting portion; 53e, 54e, 223a, 223b, 233a, 233b groove portion; 53f, 53g, 54f, 54g, 511a, 511b, 512a, 512b, 513a, 513b, 512e, 512f, 513a, 513b, 2171, 2172, 2173, 2174, 2175 opening; 55, 56 compression spring; 61, 62 spring receiving portion; 71 shackle; 72 lock body; 100 drawer type breaker; 210 sliding surface; 211, 212 terminal receiving portion; 213, 214 slider housing portion; 213a, 213b slider sliding groove; 215 airway portion; 216 air vent portion; 511c, 511d, 512c, 512d, 513c, 513d, 2161, 2162, 2163 air vent; 217 exhaust portion; 218, 218a region; 218b bottom portion region; 218c top portion region; 219 screw hole; 221, 231 terminal conductor; 221a, 231a, 222a, 232a base portion; 221b, 231b terminal portion; 222, 232 relay terminal conductor; 222b, 232b leading portion; 223, 233 connector; 511, 512, 513 panel; 521, 522 shutter; 521a, 521b, 521c blocking plate portion; 521d, 521e joining portion; 531e first rectilinear portion; 532e oblique portion; 533e second rectilinear portion; 2151 vertical airway; 2152 anterior-posterior airway; 2153 lower airway; 2153a, 2154a bent portion; 2154 upper airway.

## Claims

1. A drawer type breaker (100) comprising:
a drawer frame (3);
a terminal device (2) including a plurality of drawer-frame side conductors (22, 23) connectable to a supply-side conductor and a load-side conductor, the terminal device (2) being configured to be secured in the drawer frame (3);
a circuit breaker body (1) including a plurality of breaker-side conductors (11, 12) configured to be connected to the plurality of drawer-frame side conductors (22, 23) in a state in which the conductors (22, 23) are received in the drawer frame (3), the breaker body (1) being configured to be drawable out of the drawer frame (3); and
a shutter mechanism (5) including a panel unit (51) having a plurality of openings (512a, 512b) configured to be penetrated by the plurality of breaker-side conductors (11, 12) when the breaker body (1) is received in the drawer frame (3), the panel unit (51) being disposed between the terminal device (2) and the breaker body (1), and a shutter unit (52) configured to shut the plurality of openings (512a, 512b) when the breaker body (1) is drawn out of the drawer frame (3),
wherein the terminal device (2) includes an insulation base (21) having a plurality of terminal receiving portions (211, 212) configured to receive the plurality of drawer-frame side conductors (22, 23), and having an airway portion (215) including one or more airways (2151, 2152, 2153, 2154) connected to at least one of the terminal receiving portions (211, 212),
wherein the airway portion (215) includes an airway (2151) between the terminal receiving portions (211, 212),
wherein the drawer type breaker (100) comprises a slider (53, 54) placed in the insulation base (21), which is configured to move the shutter unit (52) in a direction for drawing out the breaker body (1) in accordance with drawing out the breaker body (1) from the drawer frame (3),
wherein the insulation base (21) includes a slider housing portion (213, 214) formed between the terminal receiving portions (211, 212), which is configured to house the slider (53, 54) movably in a direction in which the slider is opposed to the breaker body (1), **characterized in that** the slider (53, 54) includes one or more openings (53f) forming an airway (2151) between the terminal receiving portions (211, 212).

2. The drawer type breaker (100) according to claim 1, wherein
the shutter unit (52) includes an air vent (512c, 512d), and
the airway portion (215) includes an airway (2152) having one end opposed to the air vent (512c, 512d).

3. The drawer type breaker (100) according to claims 1 or 2, wherein
the airway portion (215) includes one or more airways (2153, 2154) configured to communicate from a region (218b, 218c) that is not opposed to the panel unit (51), of a region opposed to the breaker body (1), to at least one of the terminal receiving portions (211, 212), the one or more airways (2153, 2154) each having a bent shape.

4. The drawer type breaker (100) according to claim 1, wherein the one or more openings (53g, 54g) of the slider (53, 54) are configured such that a lock member (7) can be attached to the openings (53g, 54g) to keep a situation in which the breaker body (1) has been drawn out of the drawer frame (3).

5. The drawer type breaker (100) according to claim 1, wherein
the shutter unit (52) includes a first engagement portion (521f) configured to engage with the slider (53, 54),
the slider (53, 54) includes a second engagement portion (53e) configured to engage with the first engagement portion (521f), and
the one or more openings (53f) of the slider (53, 54) are formed continuously connecting to the second engagement portion (53e).

6. The drawer type breaker (100) according to any one of claims 1, 4 and 5,
wherein
the breaker body (1) includes the plurality of breaker-side conductors (11, 12) for each phase of a three-phase alternating current,
the terminal device (2) includes the plurality of drawer-frame side conductors (22, 23) and the insulation base (21) for each of the phases, and
the slider (53, 54) is disposed in the insulation base (21) for one phase, of the insulation bases (21) for the three phases.

## Patentansprüche

1. Schubladenunterbrecher (100), umfassend:
einen Einschubrahmen (3);
eine Anschlussvorrichtung (2), die eine Vielzahl von mit einem versorgungsseitigen Leiter und einem lastseitigen Leiter verbindbaren einschubrahmenseitigen Leitern (22, 23) aufweist, wobei die Anschlussvorrichtung (2) so konfiguriert ist, dass sie im Einschubrahmen (3) befestigt ist;
einen Unterbrecherkörper (1), der eine Vielzahl von unterbrecherseitigen Leitern (11, 12) aufweist, die so konfiguriert sind, dass sie mit der Vielzahl von einschubrahmenseitigen Leitern (22, 23) in einem Zustand verbunden sind, in dem die Leiter (22, 23) in dem Einschubrahmen (3) aufgenommen sind, wobei der Unterbrecherkörper (1) so konfiguriert ist, dass er aus dem Einschubrahmen (3) herausgezogen werden kann; und
einen Verschlussmechanismus (5), der eine Platteneinheit (51) mit einer Vielzahl von Öffnungen (512a, 512b), die so konfiguriert sind, dass sie von der Vielzahl von unterbrecherseitigen Leitern (11, 12) durchdrungen werden, wenn der Unterbrecherkörper (1) in dem Schubladenrahmen (3) aufgenommen ist,
wobei die Platteneinheit (51) zwischen der Anschlussvorrichtung (2) und dem Unterbrecherkörper (1) angeordnet ist, und eine Verschlusseinheit (52), die so konfiguriert ist, dass sie die Vielzahl von Öffnungen (512a, 512b) verschließt, wenn der Unterbrecherkörper (1) aus dem Einschubrahmen (3) herausgezogen ist, aufweist,
wobei die Anschlussvorrichtung (2) einen Isoliersockel (21) umfasst, der eine Vielzahl von Anschlussaufnahmeabschnitten (211, 212), die so konfiguriert sind, dass sie die Vielzahl von einschubrahmenseitigen Leitern (22, 23) aufnehmen, und einen Luftkanalabschnitt (215), der einen oder mehrere Luftkanäle (2151, 2152, 2153, 2154) umfasst, die mit mindestens einem der Anschlussaufnahmeabschnitte (211, 212) verbunden sind, aufweist,
wobei der Luftkanalabschnitt (215) einen Luftkanal (2151) zum Verbinden zwischen den Anschlussaufnahmeabschnitten (211, 212) aufweist,
wobei der Schubladenunterbrecher (100) einen Schieber (53, 54) umfasst, der in dem Isoliersockel (21) angeordnet und dazu konfiguriert ist, die Verschlusseinheit (52) in eine Richtung zum Herausziehen des Unterbrecherkörpers (1) in Übereinstimmung mit dem Herausziehen des Unterbrecherkörpers (1) aus dem Schubladenrahmen (3) zu bewegen,
wobei der Isoliersockel (21) einen Schiebergehäuseabschnitt (213, 214) umfasst, der zwischen den Anschlussaufnahmeabschnitten (211, 212) ausgebildet und dazu konfiguriert ist, den Schieber (53, 54) beweglich in eine Richtung aufzunehmen, in die der Schieber dem Unterbrecherkörper (1) gegenüberliegt,
**dadurch gekennzeichnet, dass** der Schieber (53, 54) eine oder mehrere Öffnungen (53f) aufweist, die einen Luftkanal (2151) zwischen den Anschlussaufnahmeabschnitten (211, 212) bilden.

2. Schubladenunterbrecher (100) nach Anspruch 1,
wobei die Verschlusseinheit (52) eine Entlüftungsöffnung (512c, 512d) umfasst, und wobei der Luftkanalabschnitt (215) einen Luftkanal (2152) umfasst, der ein Ende aufweist, welches der Entlüftungsöffnung (512c, 512d) gegenüberliegt.

3. Schubladenunterbrecher (100) nach Anspruch 1 oder 2,
wobei der Luftkanalabschnitt (215) einen oder mehrere Luftkanäle (2153, 2154) umfasst, die so konfiguriert sind, dass sie von einem Bereich (218b, 218c), der nicht der Platteneinheit (51) von einem dem Unterbrecherkörper (1) gegenüberliegenden Bereich gegenüberliegt, zu mindestens einem der Anschlussaufnahmeabschnitte (211, 212) führen,
wobei der eine oder die mehreren Luftkanäle (2153, 2154) jeweils eine gebogene Gestalt aufweisen.

4. Schubladenunterbrecher (100) nach Anspruch 1, wobei die eine oder mehreren Öffnungen (53g, 54g) des Schiebers (53, 54) so konfiguriert sind, dass ein Verriegelungselement (7) an den Öffnungen (53g, 54g) angebracht werden kann, um einen Zustand zu behalten, in dem der Unterbrecherkörper (1) aus dem Schubladenrahmen (3) herausgezogen wurde.

5. Schubladenunterbrecher (100) nach Anspruch 1,
wobei die Verschlusseinheit (52) einen ersten Eingriffsabschnitt (521f) umfasst, der dazu konfiguriert ist, mit dem Schieber (53, 54) in Eingriff zu kommen, wobei der Schieber (53, 54) einen zweiten Eingriffsabschnitt (53e) umfasst, der dazu konfiguriert ist, mit dem ersten Eingriffsabschnitt (521f) in Eingriff zu kommen, und
wobei die eine oder mehreren Öffnungen (53f) des Schiebers (53, 54) so ausgebildet sind, dass sie mit dem zweiten Eingriffsabschnitt (53e) fortsetzend verbunden sind.

6. Schubladenunterbrecher (100) nach einem der Ansprüche 1, 4 und 5,
wobei der Unterbrecherkörper (1) die Vielzahl von unterbrecherseitigen Leitern (11, 12) für jede Phase eines dreiphasigen Wechselstroms umfasst,
wobei die Anschlussvorrichtung (2) die Vielzahl von einschubrahmenseitigen Leitern (22, 23) und den Isoliersockel (21) für jede der Phasen umfasst, und wobei der Schieber (53, 54) in dem Isoliersockel (21) für eine Phase der Isoliersockel (21) für die drei Phasen angeordnet ist.

## Revendications

1. Disjoncteur de type tiroir (100) comprenant :
un cadre de tiroir (3) ;
un dispositif terminal (2) comportant une pluralité de conducteurs côté cadre de tiroir (22, 23) pouvant être connectés à un conducteur côté alimentation et un conducteur côté charge, le dispositif terminal (2) étant configuré pour être fixé dans le cadre de tiroir (3) ;
un corps de disjoncteur (1) comportant une pluralité de conducteurs côté disjoncteur (11, 12) configurés pour être connectés à la pluralité de conducteurs côté cadre de tiroir (22, 23) dans un état dans lequel les conducteurs (22, 23) sont reçus dans le cadre de tiroir (3), le corps de disjoncteur (1) étant configuré pour pouvoir être retiré du cadre de tiroir (3) ; et
un mécanisme d'obturation (5) comportant une unité de panneau (51) ayant une pluralité d'ouvertures (512a, 512b) configurées pour être pénétrées par la pluralité de conducteurs côté disjoncteur (11, 12) lorsque le corps de disjoncteur (1) est reçu dans le cadre de tiroir (3), l'unité de panneau (51) étant disposée entre le dispositif terminal (2) et le corps de disjoncteur (1), et une unité d'obturation (52) étant configurée pour fermer la pluralité d'ouvertures (512a, 512b) lorsque le corps de disjoncteur (1) est extrait hors du cadre de tiroir (3),
dans lequel le dispositif terminal (2) comporte une base d'isolation (21) ayant une pluralité de parties de réception de terminal (211, 212) configurées pour recevoir la pluralité de conducteurs côté cadre de tiroir (22, 23), et ayant une partie de trajet de ventilation (215) comportant un ou plusieurs trajets de ventilation (2151, 2152, 2153, 2154) reliés à au moins l'une des parties de réception de terminal (211, 212), la partie de trajet de ventilation (215) comportant un trajet de ventilation (2151) entre les parties de réception de terminal (211, 212),
dans lequel le disjoncteur de type tiroir (100) comprend un curseur (53, 54) placé dans la base d'isolation (21), qui est configuré pour déplacer l'unité d'obturation (52) dans une direction pour extraire le corps de disjoncteur (1) conformément à l'extraction du corps de disjoncteur (1) hors du cadre de tiroir (3),
dans lequel la base d'isolation (21) comporte une partie de boîtier de curseur (213, 214) formée entre les parties de réception de terminal (211, 212), qui est configurée pour loger le curseur (53, 54) de manière mobile dans une direction dans laquelle le curseur fait face au corps de disjoncteur (1), **caractérisé en ce que** le curseur (53, 54) comporte une ou plusieurs ouvertures (53f) formant un trajet de ventilation (2151) entre les parties de réception de terminal (211, 212).

2. Disjoncteur de type tiroir (100) selon la revendication 1, dans lequel
l'unité d'obturation (52) comporte une grille d'aération (512c, 512d), et
la partie de trajet de ventilation (215) comporte un trajet de ventilation (2152) ayant une extrémité en face de la grille d'aération (512c, 512d).

3. Disjoncteur de type tiroir (100) selon les revendications 1 ou 2, dans lequel la partie de trajet de ventilation (215) comporte un ou plusieurs trajets de ventilation (2153, 2154) configurés pour communiquer à partir d'une région (218b, 218c) qui n'est pas en face de l'unité de panneau (51), d'une région en face du corps de disjoncteur (1), jusqu'à au moins une des parties de réception de terminal (211, 212), la ou les trajets de ventilation (2153, 2154) ayant chacune une forme courbée.

4. Disjoncteur de type tiroir (100) selon la revendication 1, dans lequel la ou les ouvertures (53g, 54g) du curseur (53, 54) sont configurées de telle sorte qu'un élément de verrouillage (7) peut être fixé aux ouvertures (53g, 54g) pour maintenir une situation dans laquelle le corps du disjoncteur (1) a été extrait hors du cadre de tiroir (3).

5. Disjoncteur de type tiroir (100) selon la revendication 1, dans lequel
l'unité d'obturation (52) comporte une première partie de mise en prise (521f) configurée pour venir en prise avec le curseur (53, 54),
le curseur (53, 54) comporte une seconde partie de mise en prise (53e) configurée pour venir en prise avec la première partie de mise en prise (521f), et
la ou les ouvertures (53f) du curseur (53, 54) sont formées en se connectant en continu à la seconde partie de mise en prise (53e).

6. Disjoncteur de type tiroir (100) selon l'une quelconque des revendications 1, 4 et 5, dans lequel
le corps de disjoncteur (1) comporte la pluralité de conducteurs côté disjoncteur (11, 12) pour chaque phase d'un courant alternatif triphasé,
le dispositif terminal (2) comporte la pluralité de conducteurs côté cadre de tiroir (22, 23) et la base d'isolation (21) pour chacune des phases, et
le curseur (53, 54) est disposé dans la base d'isolation (21) pour une phase, des bases d'isolation (21) pour les trois phases.
